**Europäisches Patentamt**

**European Patent Office**

**Office européen des brevets**

(11) Veröffentlichungsnummer: **0 048 907**
**A1**

## (12) EUROPÄISCHE PATENTANMELDUNG

(21) Anmeldenummer: **81107407.9**

(51) Int. Cl.³: **A 01 B 49/02,** A 01 B 33/16

(22) Anmeldetag: **18.09.81**

(30) Priorität: 27.09.80 DE 3036565
12.02.81 DE 3105153
02.07.81 DE 3126167

(43) Veröffentlichungstag der Anmeldung: **07.04.82**
**Patentblatt 82/14**

(84) Benannte Vertragsstaaten: **AT BE CH DE FR GB IT LI NL SE**

(71) Anmelder: **Weichel, Ernst, Bahnhofstrasse 1, D-7326 Heiningen (DE)**

(72) Erfinder: **Weichel, Ernst, Bahnhofstrasse 1, D-7326 Heiningen (DE)**

(54) **Anbaugerätekombination für Traktoren.**

(57) Bei einer aus Lockerungsscharen (10, 10) und rotierenden Arbeitswerkzeugen (9) bestehenden Anbaugerätekombination zur Bodenlockerung, sind zwei mit Abstand und in unterschiedlicher Höhe zueinander liegenden Tragrohre (1, 1a, 13) vorgesehen. Zwischen diesen Rohren liegen dabei teilweise die Halterungen (22) für die Stiele (11) der Lockerungsschare (10). Seitlich an den Stielen (10) angebrachte Spindeln (25) dienen zur Höhenverstellung.

Zur Vermeidung von Verstopfungen zwischen den äußeren Haltestielen (11) der Werkzeuge (10) zur Bodenlockerung und den Lagerschilden (21) der zugeordneten Rotoregge ist zudem vorgesehen, diese Stiele (11) in taschenförmigen Aussparungen (31) sowei an die Geräteenden (1a') zu verlegen, daß sie mit ihrer Außenseite (11a) bündig an der Innenseite (21a) des jeweils benachbarten Lagerschildes (21) anliegen.

## Anbaugerätekombination für Traktoren

Die Erfindung bezieht sich auf eine Anbaugerätekombination gemäß dem Oberbegriff des Hauptanspruches.

Derartige Gerätekombinationen mit einem gemein-samen Tragrohr sind vom Prinzip her bereits bekannt und obwohl dieselben bereits eine geringere Baulänge aufweisen als andere, ebenfalls bekannte Geräte-Kombinationen, bei denen die Haltestiele der Lockerungskörper und die rotierenden Zinken je an einem separaten Tragrohr bzw. Tragrahmen angeordnet sind, von denen der letztere über höhenverstellbare Lenker mit dem ersteren lösbar verbunden ist, ist ihre Baulänge in vielen Fällen nicht klein genug, um beim Anbau der Gerätekombination an mittleren Traktoren eine zusätzliche Drill- oder Pflanzmaschine anbauen und durch übliche Schlepperkraftheber ausheben zu können.

Ein weiterer Nachteil der bekannten Kombination besteht darin, daß die Höheneinstellung der flügelförmigen Lockerungsschare sehr zeitraubend und nur in festgelegten Stufen möglich ist, so daß insbesondere geringe Arbeitstiefen entweder gar nicht genau oder nur sehr umständlich eingestellt werden können.

Außerdem waren sämtliche bislang bekannten Gerätekombinationen dieser Art nur für Arbeitsbreiten bis 1,80 m auslegbar.

Der Erfindung liegt daher die Aufgabe zugrunde, die vorstehend angegebenen Nachteile zu beseitigen. Dabei soll die einleitend beschrieben Gerätekombination so verbessert werden, daß sie bei allen Bodenarten schnell und einfach auf jede gewünschte auch geringe Arbeitstiefe einstellbar ist und eine noch kürzere Baulänge aufweist, so daß auch beim

- 3 -

Anbau der Gerätekombination hinter mittleren Traktoren hinter den Werkzeugen zur Saatbettherrichtung eine Drill- oder Pflanzmaschine angebaut und von üblichen Krafthebern ausgehoben werden kann.

Außerdem soll diese neue Gerätekombination noch dazu geeignet sein, eine beliebige Anzahl von Lockerungsscharen zu verwenden, also für größere Arbeitsbreiten zu dienen, und dabei die Haltestiele dieser Schare entweder mit Abstand vor der Zinkenwelle oder annähernd tangential zu letzterer anzuordnen.

Gelöst wird diese Aufgabe durch die in den Patentansprüchen angegebenen baulichen Maßnahmen, die in den Zeichnungen weitestgehend schematisch angedeutet und anhand letzterer zudem näher erläutert sind. Die Zeichnungen zeigen

Fig. 1    eine erfindungsgemäße Gerätekombination in Seitenansicht,

Fig. 1a    eine Teildraufsicht zu Fig. 1,

Fig. 2    eine Vorderansicht zu Fig. 1,

Fig. 3    eine spezielle Ausbildung der Stielhaltungen mit der Gerätekombination in Seitenansicht,

Fig. 4    eine Draufsicht zu Fig. 3,

Fig. 5    die Teilseitenansicht einer erfindungsgemäßen Gerätekombination im Bereich der äußeren Haltestiele und

Fig. 6    eine Draufsicht auf den Ausschnitt gemäß Fig. 5.

Die dargestellte Gerätekombination besteht aus einem torsionssteifen Maschinenrahmen, gebildet aus einem Tragrohr 13, einem in Fahrtrichtung mit horizontalen Abstand "a" vor diesem liegenden weiteren Rahmenrohr 1, 1a und verbindenden Knotenblechen 14 bzw. 2 endseitig und im Mittelbereich. Das vordere Rahmenrohr 1, 1a verläuft hierbei vorzugsweise in einer vom Erdboden aus höher liegenden Ebene "C" als es die Ebene des Tragrohres 13 darstellt und ist zudem portalartig gestaltet, d.h. sein Mittelteil 1 liegt gegenüber den Seitenteilen 1a wiederum in einer höheren Ebene; hierdurch entsteht in horizontaler Ebene eine Art Öffnung "D", in die das Eingangsgetriebe 6 mit dem Zapfwellenanschluß 7 eingesetzt werden kann. An den mittigen Knotenblechen 2 sitzen zudem die Anschlußzapfen 4 für die Unterlenker des Krafthebergestänges, während die Anschlußstellen 5 für den Oberlenker auf dem Rahmenmittelteil 1 angeordnet sind.

In weiterer Ausgestaltung dieser Erfindung ist dem Tragrohr 13 ein Verstärkungsprofil 15 zugeordnet und an beiden gemeinsam sind die Halterungen für das Streichblech und die Krümelwalze in an sich bekannter Weise angeschlossen. Vom Tragrohr 13 aus verläuft zudem in Richtung auf die vorderen Rahmenrohre 1, 1a eine Abdeckhaube 14 für die Zinken der Zinkenwelle, wobei diese Haube 14 auf ihrer Unterseite dem von den Zinkenspitzen des Eggenrotors beschriebenen Kreisbahnverlauf angepaßt ist und in vertikaler Projektion annähernd in Höhe des vorderen Randes der Zinkenwelle 16 mit dem Abstand "b" vor dem Rahmenrohr 1, 1a endet.

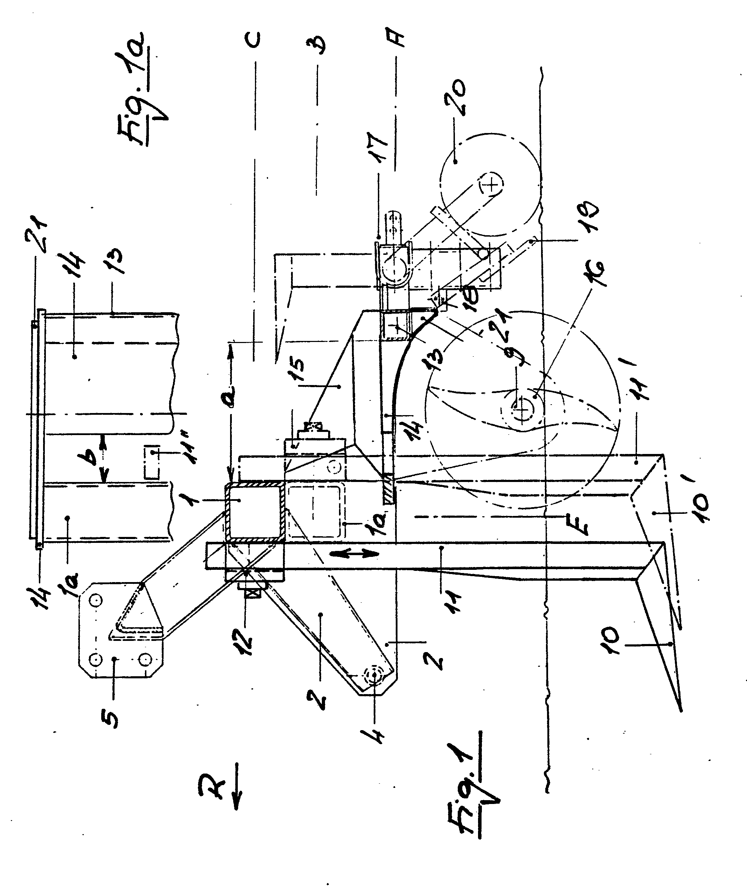

Des weiteren verläuft bei der erfindungsgemäßen Ausführung die Antriebsverbindung 8 vom Eingangsgetriebe 6 zu der Zinkenwelle 16 in der Gerätemittelachse "S" und zugleich ist dieser Verbindung 8 in Fahrtrichtung "R" gesehen, einer der Stiele 11 der Lockerungsschare 10 vorgeschaltet. Die Stiele 11' der übrigen Lockerungsschare 10' sind zusammen mit ihren Halterungen 12, in denen sie mittels Spindeln stufenlos höhenverstellbar gelagert sind, von der Vorderseite der seitlichen Rahmenteile 1a umsetzbar auf die hintere Rahmenseite und kommen dann in etwa derart zu liegen, wie in Fig. 1a mit 11'' angedeutet ist, d.h. sie erstrecken sich durch den freien Spalt "b" zwischen Rahmenrohr 1a und Abdeckhaube 14 hindurch; entgegen der zeichnerischen Darstellung, die im übrigen nur qualitativen Charakter hat, gehen die Stiele 11' bzw. 11'' fast tangential an der äußeren Begrenzung 16 der Zinkenwelle 9 vorbei.

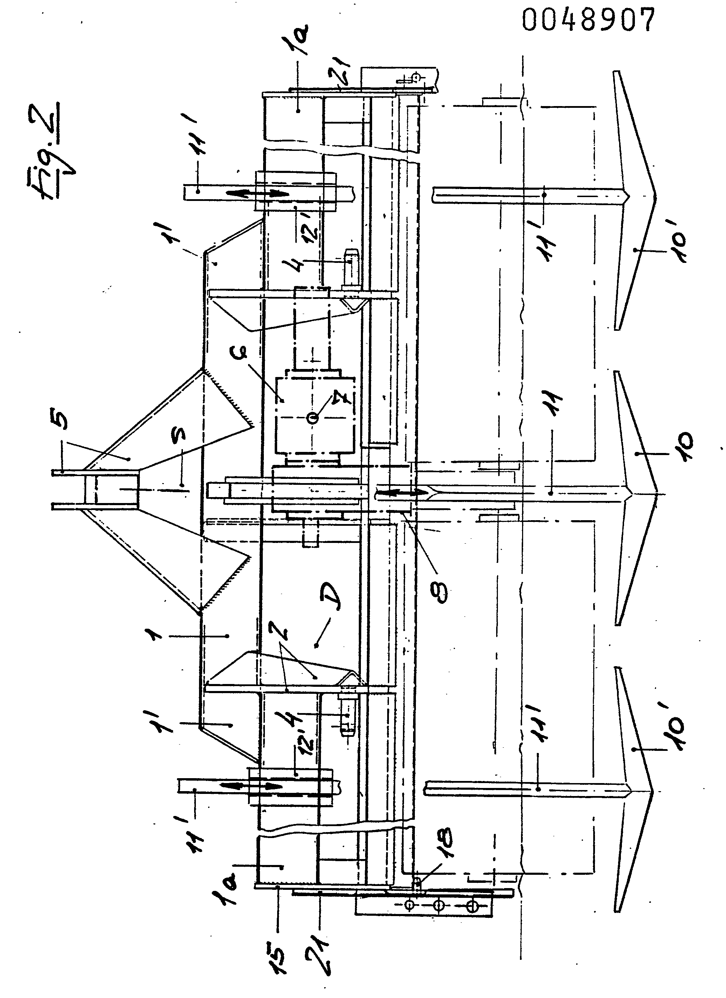

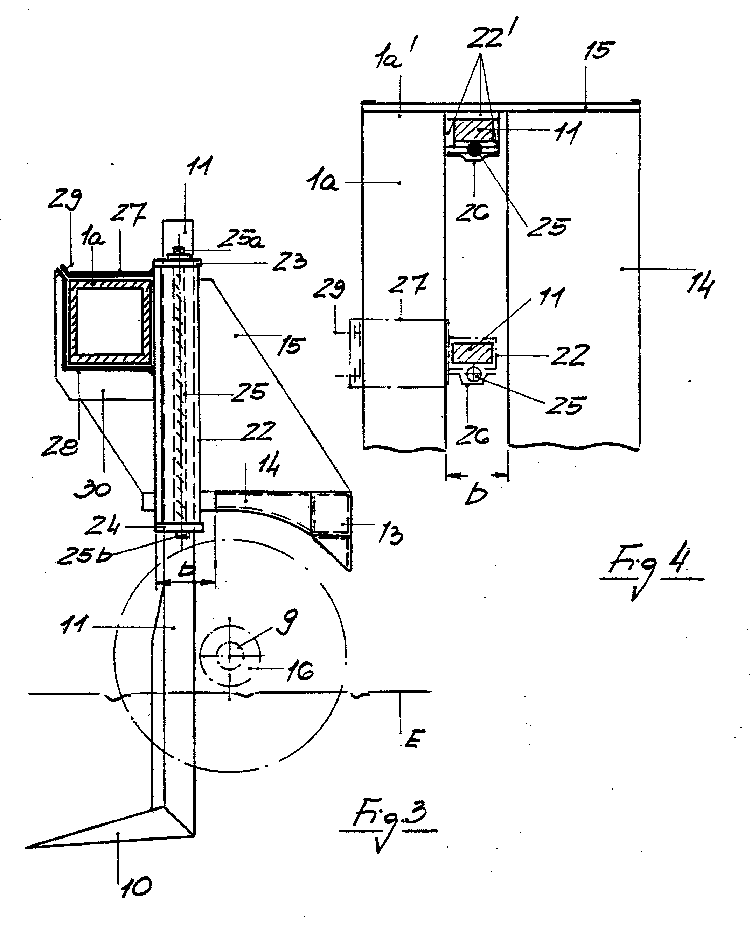

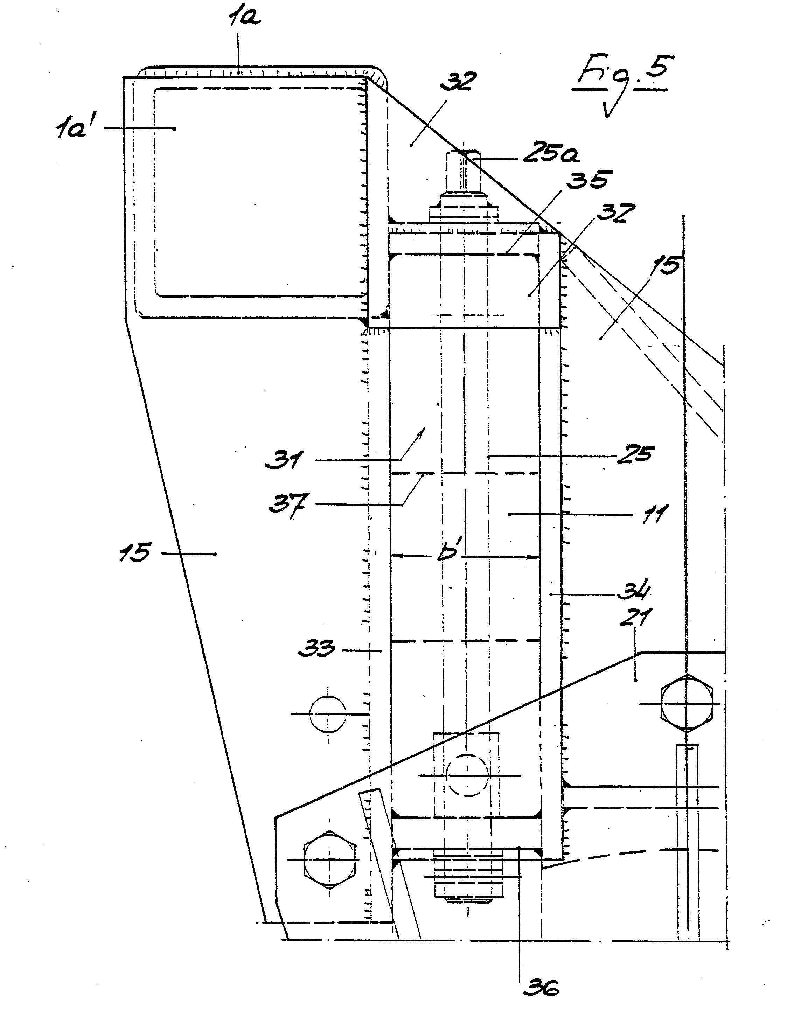

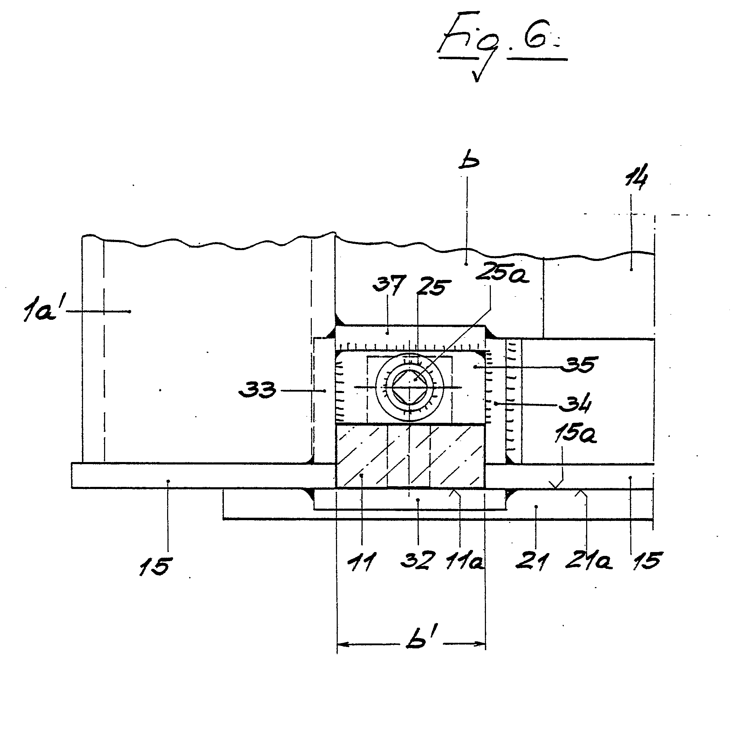

Die zuvor beschriebene, gedrungene bzw. kurze Bauweise ist insbesondere dann zu erreichen, wenn gemäß der Darstellung in den Fig. 3 und 4 die Verstellspindeln 25 seitlich zu den Stielen 11 liegen.

Diese Stiele 11 der Lockerungskörper 10 sind dabei erfindungsgemäß in Hülsen 22 geführt, die durch eine Kopf- sowie eine Fußplatte 23, 24 begrenzt sind und zwischen denen die Verstellspindel 25 mit Schlüsselansatz 25a und unterem Führungszapfen 25b gelagert ist; die Spindel 25 ist sinnvollerweise durch eine Platte oder Haube 26 abgedeckt. Zum Abschluß der Hülsen 22

an das Rahmenrohr 1a dienen die beiden Schellen 27 und 28, die über die Schrauben 29 miteinander lösbar und umsetzbar verspannt sind; die untere Schelle 28 ist zudem noch über die Konsolbleche 30 mit der Rückwand der Hülsen 22 abgestützt. Bedingt durch die seitliche Anordnung der Spindeln 25 zu den Hülsen 22 bzw. Stielen 11 ist deren Bauhöhe nunmehr so schmal geworden, daß die Hülsen 22 durch den Spalt b zwischen Rahmenrohr 1a und Abdeckblech 14 hindurch bis in eine Endlage der Fußplatte 24 unterhalb des Bleches 14 geführt, also extrem lang ausgebildet werden können, was eine einwandfreie Führung ergibt.

Schließlich ermöglicht es die erfindungsgemäße Spindelanordnung auch noch, an den Enden 1a' der seitlichen Rahmenteile 1a Führungshülsen 22 fest oder ebenfalls lösbar anzubringen, die ebenfalls durch den Spalt "b" hindurchreichen; die gesamte Gerätekombination kann somit anstatt mit nur drei, jetzt auch mit vier Lockerungskörpern 10 bestückt werden.

- 9 -

In der Praxis hat es sich nun gezeigt, daß bei der zuvor erwähnten Anordnung der Spalt zwischen den jeweils äußeren Haltestielen und den benachbarten Lagerkonsolen bei der Arbeit sehr störend wirkt und einerseits zum Zusetzen mit Erde sowie zum anderen zu Verstopfungen und Beeinträchtigungen der Arbeitsqualität insgesamt führen kann.

Aufgabe der vorliegenden Erfindung ist es daher auch, eine bauliche Lösung der Außenstielanordnung zu schaffen, bei der dieser störende Spalt nicht mehr vorhanden ist.

Es wurde hierzu bereits hinreichend beschrieben, daß an den jeweiligen Endseiten 1a' der hier behandelten Gerätekombination der Hauptrahmen 1a über seitliche Verbindungsplatten 15 mit der Abdeckung 14 für die nicht dargestellte Rotoregge verbunden ist. Erfindungsgemäß ist nun jede dieser Platten 15 mit einer vertikal bzw. dem Verlauf der Haltestiele 11 entsprechend gerichteten Aussparung oder Unterbrechung 31 versehen, die einerseits der Breite b' der Haltestiele 11 entspricht und zum anderen

0048907

durch die feste seitliche Zuordnung von Verstellspindel 25 mit Spindelkopf 25a und Kopf- sowie
Fuß- und Rückenplatte 35 bzw. 36 bzw. 37 derart
zur Maschinenmitte hin begrenzt ist, daß in Fahrtrichtung R gesehen die Außenseiten 11a der Haltestiele 11 der hier nicht gezeigten Lockerungsschare
bündig zu den Oberflächen 15a der Platten 15 verlaufen, sowie dadurch auch unmittelbar an der Innenseite 21 der jeweiligen Lagerkonsole 21 der hier
ebenfalls nicht gezeigten Rotoregge anliegen.

Durch diese bauliche bzw. anordnungsgemäße Maßnahme
wird also die Lösung der mit der Erfindung gestellten
Aufgabe erreicht, nämlich das Beseitigen eines in
Arbeitsrichtung offenen Spaltes zwischen den Außenstielen und den benachbarten Platten, der zum Zusetzen mit Halm- bzw. Blattgut oder Erde und somit
zu Verstopfungen an der Maschine sowie auch zu
Störungen des Arbeitsablaufs führen kann.

Zur seitlichen Führung der jeweiligen Haltestiele
11 nach außen hin ist zudem im Bereich des Spindelkopfes 25a außen auf die Plattenteile 15 ein die
Breite b' der Aussparung 31 überdeckenden Knotenblech 32 aufgesetzt, während zur Fixierung der

Außenstiele 11 in Fahrtrichtung an das Rahmenrohr 1a und/oder die seitlichen Verbindungsplatten 15 fest angeschlossene Vertikalstege 33
und 34 dienen.

Letztlich ist noch zu erwähnen, daß die hier
beschriebene, erfinderische Gesamtanordnung
nicht auf die Verwendung einer Rotoregge beschränkt ist, sondern äquivalent bezüglich
Rahmenkonstruktion und Bodenbearbeitung auch
dann verwendet werden kann, wenn für das Zerkleinern der Schollen eine sog. Kreiselegge
mit um vertikale Antriebsachsen umlaufenden
Arbeitswerkzeugen eingesetzt werden soll. Ebenso
muß das vordere Rahmenrohr 1, 1', 1a nicht unbedingt die portalartig tiefer gelegten Seitenteile 1a aufweisen, sondern kann ebenso als in
der Höhe von 1, 1' verlaufender gerader Träger
ausgebildet sein.

- 1 -

P a t e n t a n s p r ü c h e

1. Anbaugerätekombination für Traktoren zur Bodenlockerung und Saatbettherrichtung mit einem sich
quer zur Fahrtrichtung erstreckenden Tragrohr,
Kupplungselementen für das Krafthebergestänge des
Traktors, wenigstens einem Getriebe und Lagerkonsolen für eine angetriebene, von einer Abdeckhaube teilweise umgebene Zinkenwelle sowie Befestigungsvorrichtungen für Lockerungsschare tragende
Haltestiele,
dadurch gekennzeichnet,
daß dem Tragrohr (13) in Fahrtrichtung (R) gesehen
ein weiteres Rahmenrohr (1, 1a) mit horizontalem
Abstand (a) vorgelagert ist,
beide Rohre (13 und 1, 1a) endseitig und im Mittelbereich durch Knotenbleche (2 bzw. 14) zu einem
torsionssteifen Gerätegestell untereinander verbunden sind,
und das vordere Rahmenrohr (1, 1a) in einer gegenüber
dem Tragrohr (13) vom Erdboden aus höher liegenden
Ebene (C) verläuft.

- 2 -

2. Gerätekombination nach Anspruch 1,

   dadurch gekennzeichnet,

   daß dem Tragrohr (13) ein in etwa der Krümmung der Abdeckhaube (14) angepaßtes Verstärkungsprofil (15) zugeordnet ist und diese Abdeckhaube (14) in vertikaler Projektion annähernd in Höhe des vorderen Randes der Zinkenwelle (16) endet.

3. Gerätekombination nach den Ansprüchen 1 und 2, dadurch gekennzeichnet,

   daß das vordere Rahmenrohr (1, 1a) in zwei unterschiedlichen Horizontalebenen (A und B) verläuft, wobei die an den Geräteaußenseiten befindlichen Rahmenteile (1a) tiefer liegen als das Rahmenmittelteil (1).

4. Gerätekombination nach den Ansprüchen 1 bis 3,

   dadurch gekennzeichnet,

   daß die Mittelachsen der vorderen Rahmenteile (1, 1a) in einer gemeinsamen vertikalen Ebene (E) liegen.

0048907

5. Gerätekombination nach den Ansprüchen 1 bis 4,

dadurch gekennzeichnet,

daß das Rahmenmittelteil (1) mit der Unterseite
seiner Endabschnitte (1') auf der Oberseite der
äußeren Rahmenteile (1a) unmittelbar aufliegt
und beide über zusätzliche Knotenbleche (2)
miteinander verbunden sind.

6. Gerätekombination nach Anspruch 5,

dadurch gekennzeichnet,

daß sämtliche Rahmenabschnitte (1, 1a) aus einem
Vierkantrohrprofil bestehen, an den Konsolenblechen (2) die Anschlußzapfen (4) für die Unterlenker des Krafthebergestänges angeordnet sind
und am Rahmenmittelteil (1) der Oberlenkeranschluß
(5) sitzt.

7. Gerätekombination nach einem oder mehreren der
vorhergehenden Ansprüche,

dadurch gekennzeichnet,

daß das Eingangsgetriebe (6) mit dem Zapfwellenanschluß (7) im Bereich der portalartigen Rahmenöffnung (D) und seitlich aus der Gerätemittelachse
(S) heraus versetzt angeordnet und am Rahmen (1, 1a)
bzw. an den Konsolblechen (2) befestigt ist.

- 4 -

0048907

8. Gerätekombination nach mindestens einem der vorhergehenden Ansprüche, dadurch gekennzeichnet, daß die Anschlußstellen (17, 18) für Streichblech (19) und Krümelwalze (20) in an sich bekannter Weise am Tragrohr (13) liegen.

9. Gerätekombination nach einem oder mehreren der vorhergehenden Ansprüche, dadurch gekennzeichnet, daß die endseitigen Lagerkonsolen (21) der Zinkenwelle (16) außen auf den Knotenblechen (14) aufgesetzt sind.

10. Gerätekombination nach einem oder mehreren der vorhergehenden Ansprüche, dadurch gekennzeichnet, daß die Antriebsverbindung (8) zu der Zinkenwelle (9) in der Gerätemittelachse (S) verläuft und, in Fahrtrichtung (R) gesehen, einer der Lockerungsschare (10) mit seinem Stiel (11) vor dieser Antriebsverbindung liegt.

0048907

11. Gerätekombination nach Anspruch 6,

dadurch gekennzeichnet,

daß der Stiel (11) an der Vorderseite des Rahmenmittels (1) in einer Halterung (12) höhenverstellbar geführt ist.


12. Gerätekombination nach einem oder mehreren der vorhergehenden Ansprüche,

dadurch gekennzeichnet,

daß die Halterungen (12') für die Stiele (11')

der übrigen Lockerungsschare (10') umsetzbar entweder an der Vorder- oder Hinterseite der

Rahmenseitenteile (1a) angebracht sind und in letzterem Falle in dem freien Raum (b) zwischen Rahmenseitenteil (1a) und Abdeckhaube (14) liegen.


13. Gerätekombination nach einem oder mehreren der vorhergehenden Ansprüche,

dadurch gekennzeichnet,

daß die der Höhenverstellbarkeit der Haltestiele (11) dienenden Spindeln (25) seitlich aus der vertikalen Stielebene heraus versetzt an den Führungshülsen (22) angebracht sind.

14. Anbaugerätekombination nach Anspruch 1,

dadurch gekennzeichnet,

daß die Verstellspindeln (25) jeweils in einer Kopf- sowie einer Fußplatte (23 und 24) geführt und mittels einer Haube oder eines Gehäuses (26) abgedeckt sind.

15. Anbaugerätekombination nach den Ansprüchen 1 und 2,

dadurch gekennzeichnet,

daß sich die Verstellspindeln (25) über die gesamte Länge der Führungshülsen (22) erstrecken und letztere, bei Anordnung an der

Rahmenrückseite (Fig. 1), durch den freien

Spalt (b) zwischen Rahmenrohr (1a) und Abdeckhaube (14) hindurch verlaufen.

16. Anbaugerätekombination nach den Ansprüchen

1 bis 3,

gekennzeichnet durch

zusätzliche, fest an den Enden (1a') der äußeren

Rahmenteile (1a) angebrachte Führungshülsen (22') mit Verstellspindeln (25) und Abdeckung (26).

17. Anbaugerätekombination nach Anspruch 4,

dadurch gekennzeichnet,

daß die fest angeordneten Führungshülsen (22') auf der Rahmenrückseite liegen und zusätzlich an den seitlichen Verstärkungsprofilen (15) abgestützt sind.

18. Anbaugerätekombination nach einem oder mehreren der vorhergehenden Ansprüche,

dadurch gekennzeichnet,

daß die Verbindungsplatten (15) eine der Breite (b ) der Haltestiele (11) entsprechende, in Längsrichtung letzterer verlaufende Aussparung bzw. Unterbrechung (31) aufweisen und in Fahrtrichtung (R) gesehen die Außenseiten (11a) der Haltestiele (11) bündig zu den Oberflächen (15a) der Verbindungsplatten (15) verlaufen sowie unmittelbar an der Innenseite (21a) der jeweiligen Lagerkonsole (21) anliegen.

19. Anbaugerätekombination nach Anspruch 18, dadurch gekennzeichnet,

daß zur seitlichen Führung der Außenseite (11a) der Haltestiele (11) die Aussparung (31) jeder der Verbindungsplatten (15) zumindest im Bereich

- 8 -

des Hauptrahmens (1a) durch ein auf die Plattenoberfläche (15a) aufgesetztes Knotenblech (32) überdeckt ist.

20. Anbaugerätekombination nach den Ansprüchen 18 und 19,

dadurch gekennzeichnet,

daß zur Fixierung der Haltestiele (11) in Arbeitsrichtung (R) an das Rahmenrohr (1a) und/oder die seitlichen Verbindungsplatten (15) fest angeschlossene Vertikalstege (33, 34) als stirnseitige Führungsflächen vorgesehen sind.

Fig. 1a

Fig. 1

0048907

1/5

Fig. 2

2/5

0048907

0048907

Fig 4

Fig. 3

0048907

_Fig. 5_

# Fig. 6.

**Europäisches Patentamt**

**EUROPÄISCHER RECHERCHENBERICHT**

0048907

Nummer der Anmeldung

EP 81 10 7407

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>CH - A - 517 430</u> (ROTARY HOES LTD) | 1, 11 |
| A | <u>FR - A - 2 389 310</u> (LUTZ) | |
| A | <u>GB - A - 1 215 054</u> (VAN DER LELY) <br> * Seite 1, Zeilen 47-66; Figuren 1,2 * <br> -- | 1, 11 |
| A | <u>FR - A - 2 425 191</u> (WEICHEL) | |
| A | <u>FR - A - 2 348 637</u> (WEICHEL) | 11 |
| A | <u>FR - A - 2 435 889</u> (WEICHEL) | |
| A | <u>FR - A - 1 574 457</u> (MASCHINENFABRIK SCHMOTZER) <br> * Seite 5, Zeilen 2-11; Figur 2 * <br> -- | 10 |
| A | <u>FR - A - 2 410 423</u> (PATENT CONCERN) <br> * Seite 7, Zeilen 7-17; Figuren 5,6 * <br> ----- | 1,6 |

**KLASSIFIKATION DER ANMELDUNG** (Int. Cl. ⁱ)

A 01 B 49/02
A 01 B 33/16

**RECHERCHIERTE SACHGEBIETE** (Int. Cl. ³)

A 01 B

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-12-1981 | VERDOODT |

EPA form 1503.1   06.78